# EUROPEAN PATENT SPECIFICATION

(11) **EP 2 206 182 B1**
(45) Date of publication and mention of the grant of the patent: **24.04.2019**
(21) Application number: 08838163.7
(22) Date of filing: 08.10.2008
(51) Int. Cl.: C01G 53/00, H01M 4/525, H01M 4/505, H01M 4/131, H01M 10/0525

(54) **CATHODE ACTIVE MATERIAL FOR LITHIUM SECONDARY BATTERY**
AKTIVES KATHODENMATERIAL FÜR LITHIUM-SEKUNDÄRBATTERIE
MATERIAU ACTIF CATHODIQUE POUR BATTERIE SECONDAIRE AU LITHIUM

(30) Priority: 13.10.2007 KR 20070103287
(43) Date of publication of application: 14.07.2010
(73) Proprietor: LG Chem, Ltd., Seoul 07336 (KR)
(72) Inventor: CHANG, Sung kyun, Daejeon 305-729 (KR); SHIN, Ho Suk, Seoul 138-784 (KR); PARK, Hong-Kyu, Daejeon 305-759 (KR)
(74) Representative: Hoffmann Eitle
(86) International application number: PCT/KR2008/005912
(87) International publication number: WO 2009/048264

(56) References cited:
- JP-A- 11 307 094
- JP-A- 2003 031 219
- KR-A- 19990 071 411
- US-A1- 2003 170 540

## Description

### FIELD OF THE INVENTION

The present invention relates to a cathode active material for a lithium secondary battery and, more particularly, to a cathode active material including a lithium-transition metal composite oxide which has a specific composition, includes an excess of lithium and, as a constitutional element, nickel having a predetermined oxidation number, so as to exhibit a stable crystal structure and excellent rate characteristics under high rate charge/discharge conditions.

### BACKGROUND OF THE INVENTION

With increased development of technologies for mobile devices and requirements for the same, a demand for a secondary battery as an energy source of the mobile device has rapidly increased. In particular, a lithium secondary battery having high energy density and operating potential, a relatively long lifespan, and a low self-discharge rate is commercially available and widely used in the art.

Further, increasing interest in environmental problems leads to a great deal of study and investigation into electric vehicles and/or hybrid vehicles which may be employed in place of commercial vehicles using fossil fuels such as gas engine vehicles, diesel engine vehicles, etc. Such a hybrid vehicle or electric vehicle mostly uses a nickel hydrogen metal secondary battery as a power source and, in recent years, a variety of strategies are actively under investigation to apply a lithium secondary battery with high energy density and discharge voltage to the hybrid electric vehicle and some of them are now commercially available.

As a cathode active material for the lithium secondary battery, lithium containing cobalt oxides (LiCoO₂) are generally used. However, using other materials, for example, lithium containing manganese oxides such as LiMnO₂ with a lamellar crystal structure, LiMn₂O₄ with a spinel structure, and the like and/or lithium containing nickel oxides (LiNiO) may also be taken into consideration.

Among various cathode active materials, LiCoO₂ with excellent lifespan and superior charge/discharge efficiency is generally used. However, this substance has a significant problem of insufficient price competitiveness since cobalt is expensive as a limited resource.

Although lithium manganese oxides such as LiMnO₂, LiMn₂O₄, etc. have merits of excellent thermal stability, low cost and easy synthesis thereof, these compounds entail some disadvantages of low capacity, deteriorated high-temperature characteristics and low conductivity.

In addition, LiNiO₂ based cathode active materials are relatively inexpensive and have a high discharge capacity. However, when exposed to atmosphere and/or moisture, these materials exhibit marked phase transfer in crystal structure depending on a variation in volume associated with a charge/discharge cycle.

In order to overcome these difficulties, a great deal of research and investigation into use of a lithium oxide including nickel and manganese in a relative ratio of 1:1 or nickel, cobalt and manganese in a relative ratio of 1:1:1 as a cathode active material have been conducted. The cathode active material prepared by mixing nickel, cobalt and/or manganese exhibited more enhanced characteristics than a cathode active material including only any one of these transition metals. However, there are still requirements for simplifying production processes and for improving high rate characteristics of a battery.

In order to solve the conventional problems described above, the present invention provides a cathode active material including a lithium-transition metal composite oxide, wherein each constitutional element of the composite oxide has predetermined composition and oxidation number.

As for technical concepts in regard to the present invention, Korean Laid-Open Application No. 2005-047291 and PCT International Laid-Open Application No. WO 2002-078105 describe an oxide represented by a compositional formula of Li₁₊ₓNi_{1/2}Mn_{1/2}O₂ (0<x<1), which includes nickel and manganese in equal amounts as well as an excess of lithium, so as to eliminate structural modification occurring during overcharge. This oxide is partially duplicated with the present invention in terms of compositional range. However, the present inventors found that, if the above oxide maintains the above defined formula without considering a variable oxidation number of nickel, contrary to the cathode active material according to the present invention, rate characteristics of the oxide do not attain desired levels under high rate charge/discharge conditions. Or, even worse, lithium by-products (for example, LiOH, LiCO₂, etc.) may cause pH change, leading to degradation of an electrolyte in a battery.

Accordingly, there is still a strong need for development of a novel cathode active material with a stable crystal structure and improved rate characteristics under high rate charge/discharge conditions.

### SUMMARY OF THE INVENTION

Therefore, the present invention has been made to solve the above problems and other technical problems that have yet to be resolved.

The present inventors have undertaken extensive research and studies and found that a lithium based composite oxide including an excess of lithium and nickel having an oxidation number of at least 2, which may be used as a cathode active material, so as to improve physical properties while maintaining a stable crystal structure and to attain remarkably enhanced rate characteristics under high rate charge/discharge conditions. As a result, the present invention was accomplished.

On the basis of this finding, it is an object of the present invention to provide a cathode active material for a lithium secondary battery according to claim 1, including: a lithium-transition metal composite oxide represented by the following formula (1):

Li₁₊ₐNi'_{b}Ni"_{c}Mn_{d}CoₑO₂ (1)

wherein a, b, c, d and e are defined by an equation of 1.1≤(1+a)/(b+c+d+e)<1.3 such that the molar fraction of Li relative to all transition metals in the composite oxide is at least 1.1 and less than 1.3;
an average oxidation number of each transition metal element described above is represented as follows:
   Ni'>2+, Ni"=3+, Mn=4+ and Co=3+;
   0< e≤0.1;
   0.2<b+c≤0.55, 0.2<d≤0.55;
   |(b+c)-d|<0.1 and wherein the molar ratio of nickel (b+c) is greater than of manganese (d), and the excess nickel above the molar ratio of nickel to the molar ratio of manganese may be Ni".

As for conventional cathode active materials, an excess of lithium is contained in a lithium-transition metal composite oxide to cause a difficulty in maintaining a stable crystal structure in terms of ratios of constitutional elements and a desired oxidation number of each transition metal element (such as Ni) in the composite oxide. Therefore, a path for movement of lithium ions may not be secured under high rate charge/discharge conditions which in turn considerably deteriorates rate characteristics, and may cause generation of lithium by-products (LiOH, LiCO₂, etc.) which in turn leads to pH variation of a battery.

Accordingly, the present inventors have undertaken extensive research and various experiments and found that controlling an average oxidation number of each transition metal element, for example, Ni'>2+, Ni"=3+, Mn=4+ and Co=3+ and maintaining desired ratios of constitutional elements depending on excess lithium by the above equation, a cathode active material has a stable crystal structure so that lithium ion mobility and rate characteristics are thereby improved. That is, as for a lithium-transition metal composite oxide contained in the cathode active material of the present invention, an average oxidation number of is higher than 2 while an average oxidation number of Ni" is 3, which are both higher than an average oxidation number of Ni commonly used in the conventional cathode active material. As a result, a stable bonding structure and a high bonding force between a transition metal element and oxygen is attained. This result is expected because electric charge is increased as the oxidation number of Ni increases, resulting in an increase in coulombic force between the transition metal element and oxygen.

Therefore, the cathode active material of the present invention has a stable crystal structure and ensure a desirable path required for rapid movement of lithium ions under high rate charge/discharge conditions, thereby remarkably enhancing rate characteristics while maintaining stability in crystal structure.

### BRIEF DESCRIPTION OF THE DRAWINGS

The above and other objects, features and other advantages of the present invention will be more clearly understood from the following detailed description taken in conjunction with the accompanying drawings, in which:
FIGS. 1 to 5 are graphs illustrating rate characteristics of cathode active materials according to Examples 1 to 12, compared to those according to Comparative Examples 1 to 11; and
FIGS. 6 to 10 are each pairs of graphs illustrating measured lattice constants (a and c) for cathode active materials according to Examples 1 to 4, Examples 5 and 6, Examples 7 and 8, Examples 9 and 10, and Examples 11 and 12, respectively.

### DETAILED DESCRIPTION OF PREFERRED EMBODIMENTS

An excess of lithium contained in a cathode active material according to the present invention means an amount of lithium sufficient to prevent deterioration in structural stability of a lithium-transition metal composite oxide caused by the excess lithium and, at the same time, to provide enhanced rate characteristics thereof under high rate charge/discharge conditions. As defined by the above compositional formula, a value calculated by dividing a molar fraction of lithium (which is contained in the cathode active material) by the sum of molar fractions of all transition metals (which are contained in the cathode active material) is at least 1.1 and less than 1.3, and preferably, may range from 1.1 to 1.2.

Molar ratios of nickel and manganese may independently range from 0.2 to 0.55 and, a molar ratio of each element in the composite oxide described above may be flexibly adjusted relative to the excess lithium. The amount of manganese is less than that of nickel. However, an absolute value of a difference between molar ratios of nickel and manganese is always set to less than 0.1 so that excellent physical properties of nickel and manganese, respectively, may be balanced in the cathode active material.

Compared to a conventional three-component based cathode active material including transition metals such as nickel, manganese and/or cobalt wherein nickel maintains an oxidation number of 2, an average oxidation number of nickel in the composite oxide included in the cathode active material according to the present invention may vary depending on an amount of excess lithium contained in the composite oxide. In other words, the composite oxide included in the cathode active material according to the present invention may contain Ni²⁺ and Ni³⁺ simultaneously.

More particularly, as for the average oxidation number of nickel, with the molar ratio of nickel (that is, b+c) being greater than that of manganese (d), Ni' is more than 2+ and Ni" is 3+ and, in this case, the excess nickel above the molar ratio of nickel to the molar ratio of manganese may be Ni". This Ni" often replaces a metal element located at a site on which the excess lithium having the oxidation number of 1 is combined with oxygen, thus having an oxidation number of 3 in order to maintain the predetermined total oxidation number. Herein, a nickel moiety in an amount corresponding to the molar ratio of manganese may be Ni' and the average oxidation number of nickel may be at least 2 because of simultaneous existence of Ni²⁺ and Ni³⁺ and influence of the excess lithium.

A molar ratio of cobalt is in general not more than 0.1 and this element may be included in a minimum amount.

So long as the molar ratios of nickel and manganese and the excess lithium in a cathode active material of the present invention are maintained as defined by formula (1), a process for preparation of the cathode active material is not particularly limited. For example, the cathode active material may be prepared by reaction of a nickel-manganese-(cobalt) hydroxide precursor with lithium carbonate. More particularly, preparing a nickel-manganese-(cobalt) hydroxide with a constitutional composition sufficient to prepare an oxide containing an excess of lithium after reaction, the prepared hydroxide is mixed with a lithium containing precursor to proceed reaction thereof and the reacted mixture is calcined at 800 to 1,200 °C for 8 to 24 hours to produce the cathode active material as a final product.

The present invention also provides a lithium secondary battery including the cathode active material produced above. In general, a lithium secondary battery includes a cathode, an anode, a separation membrane and a non-aqueous electrolyte containing a lithium salt.

The cathode may be formed by applying a mixture of a cathode active material, a conductive material and a binder to a cathode (current) collector, drying the coated collector and pressing the treated collector and, if necessary, the mixture may additionally include filler.

The cathode collector may have a thickness ranging from 3 to 500*µ*m. Such cathode collector is not particularly restricted so long as it does not induce chemical modification of a battery while having excellent conductive properties. For example, the cathode collector may include stainless steel, aluminum, nickel, titanium, calcined carbon, or aluminum or stainless steel surface-treated with carbon, nickel, titanium, silver, etc., and so forth. The cathode collector may have microfine roughness on a surface thereof so as to reinforce adhesion of the cathode active material and, in addition, may be fabricated in various forms such as a film, a sheet, a foil, a net, a porous material, a foamed material, a non-woven fabric material, and the like.

The conductive material may be added in an amount of 1 to 50wt.% of the total weight of a mixture containing the cathode active material. Such conductive material is not particularly restricted so long as it does not cause chemical modification of a battery while having desired conductivity. For instance, the conductive material may include: graphite such as natural graphite or artificial graphite; carbon black such as acetylene black, ketjen black, channel black, furnace black, lamp black, summer black, etc.; conductive fiber such as carbon fiber, metal fiber, etc.; metal powder such as carbon fluoride, aluminum, nickel powder, etc.; conductive whiskers such as zinc oxide, potassium titanate, etc.; conductive metal oxides such as titanium oxide; polyphenylene derivatives, and so forth.

The binder used herein may comprise a component for supporting combination of an active material with the conductive material and/or binding to the collector and, in general, may be added in an amount of 1 to 50wt.% of the total weight of a mixture comprising a cathode active material. Such binder may include, for example, polyvinylidene fluoride, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene terpolymer (EPDM), sulfonated EPDM, styrene butyrene rubber, fluorine rubber, various copolymers, etc.

The filler used herein may optionally be used to inhibit expansion of a cathode and, is not particularly restricted so long as it is a fibrous material which does not cause chemical modification of a battery. For example, the filler may include an olefin based polymer such as polyethylene, polypropylene, etc.; or a fibrous material such as glass fiber, carbon fiber, etc.

An anode is fabricated by applying an anode active material to an anode collector and drying the coated collector and may optionally include other components described above.

The anode collector generally has a thickness of 3 to 500*µ*m. Such anode collector is not particularly restricted so long as it does not induce chemical modification of a battery while having favorable conductive properties. For example, the anode collector may include copper, stainless steel, aluminum, nickel, titanium, calcined carbon, copper or stainless steel surface-treated with carbon, nickel, titanium, silver, etc., aluminum-cadmium alloy, and so forth. Similar to a cathode collector, the anode collector may have microfine roughness on a surface thereof so as to reinforce adhesion of the anode active material, and the anode collector may be fabricated in various forms such as a film, a sheet, a foil, a net, a porous material, a foamed material, a non-woven fabric material, and the like.

The anode active material may include, for example: carbon such as graphitization retardant carbon, graphite based carbon, etc.; metal composite oxides such as Li_{y}Fe₂O₃ (0≤y≤1), Li_{y}WO₂ (0≤y≤1), SnₓMe₁₋ₓMe'_{y}O_{z} (Me: Mn, Fe, Pb, Ge; and Me': Al, B, P, Si, Group 1, 2 or 3 elements; 0<x≤1; 1≤y≤3; 1≤z≤8); lithium metal; lithium alloy; silicon alloy; tin alloy; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, etc.; a conductive polymer such as polyacetylene; Li-Co-Ni based materials, and the like.

The separation membrane used herein is interposed between the cathode and the anode and may be a thin film having high ion permeability as well as excellent mechanical strength and insulation. The separation membrane may have a pore diameter ranging from 0.01 to 10*µ*m and a thickness ranging from 5 to 300*µ*m. Examples of the separation membrane include: an olefin based polymer such as polypropylene having favorable chemical resistance and hydrophobic properties; a sheet or non-woven fabric made of glass fiber or polyethylene, etc. If the battery includes a solid electrolyte such as a polymer, the solid electrolyte may also function as the separation membrane.

The non-aqueous electrolyte containing a lithium salt used herein primarily includes an electrolyte and a lithium salt and the electrolyte may be a non-aqueous organic solvent, an organic solid electrolyte, an inorganic solid electrolyte, and the like.

The non-aqueous organic solvent may include, for example, an aprotic organic solvent such as N-methyl-2-pyrrolidinone, propylene carbonate, ethylene carbonate, butylene carbonate, dimethyl carbonate, diethyl carbonate, ethylmethyl carbonate, γ-butyrolactone, 1,2-dimethoxyethane, tetrahydrofuran, 2-methyl tetrahydrofuran, dimethylsulfoxide, 1,3-dioxolan, formamide, dimethylformamide, dioxolan, acetonitrile, nitromethane, methyl formate, methyl acetate, phosphoric acid triester, trimethoxy methane, dioxolan derivatives, sulfolane, methyl sulfolane, 1,3-dimethyl-2-imidazolidinone, propylene carbonate derivatives, tetrahydrofuran derivatives, ether, methyl propionate, ethyl propionate, etc.

The organic solid electrolyte may include, for example, polyethylene derivatives, polyethylene oxide derivatives, polypropylene oxide derivatives, phosphoric acid ester polymer, poly agitation lysine, polyester sulfide, polyvinyl alcohol, polyvinylidene fluoride, a polymer containing ionic dissociation groups, and the like.

The inorganic solid electrolyte may include, for example, Li based nitrides, halides or sulfates such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂, and so forth.

The lithium salts are readily dissolved in the non-aqueous electrolyte and may include, for example, LiCl, LiBr LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₄SO₃Li, CF₃SO₃Li, LiSCN, LiC(CF₃SO₂)₃, (CF₃SO₂)₂NLi, chloroboran lithium, lower aliphatic carboxylic acid lithium, lithium tetraphenyl borate, imides, etc.

In order to improve charge/discharge characteristics and/or flame retardancy, the electrolyte may further include, for example, pyridine, triethyl phosphite, triethanolamine, cyclic ether, ethylenediamine, n-glyme, hexaphosphoric triamide, nitrobenzene derivatives, sulfur, quinoneimine dyes, N-substituted oxazolidinone, N,N-substituted imidazolidine, ethyleneglycol dialkylether, ammonium salts, pyrrol, 2-methoxy ethanol, aluminum trichloride, etc. Optionally, halogen containing solvents such as carbon tetrachloride or ethylene trifluoride may be added to obtain flame resistance, or carbon dioxide gas may be added to enhance high-temperature retention properties.

### EXAMPLES

Now, the present invention will be described in more detail in the following description with reference to exemplary embodiments and examples of the present invention.

### [Example 1]

As a composite transition metal precursor, a combined hydroxide M(OH)₂ (M=Ni_{0.452}Mn_{0.450}Co_{0.098}) was used. The combined hydroxide was mixed with Li₂CO₃ in a stoichiometric ratio of Li:M of 1.14:1 and the mixture was calcined at 850 to 1,000°C for 10 hours in atmosphere to produce a cathode active material containing a lithium-transition metal composite oxide.

### [Example 2]

A cathode active material was prepared by the same procedure as described in Example 1, except that the mixture had a stoichiometric ratio of Li:M of 1.2:1.

### [Example 3]

A cathode active material was prepared by the same procedure as described in Example 1, except that the mixture had a stoichiometric ratio of Li:M of 1.24:1.

### [Example 4]

A cathode active material was prepared by the same procedure as described in Example 1, except that the mixture had a stoichiometric ratio of Li:M of 1.34:1.

### [Comparative Example 1]

A cathode active material was prepared by the same procedure as described in Example 1, except that the mixture had a stoichiometric ratio of Li:M of 1.0:1.

### [Comparative Example 2]

A cathode active material was prepared by the same procedure as described in Example 1, except that the mixture had a stoichiometric ratio of Li:M of 1.03:1.

### [Comparative Example 3]

A cathode active material was prepared by the same procedure as described in Example 1, except that the mixture had a stoichiometric ratio of Li:M of 1.05:1.

### [Example 5] not part of the invention

A cathode active material was prepared by the same procedure as described in Example 1, except that a combined hydroxide M(OH)₂ (M=Ni_{0.499}Mn_{0.501}) was used as a composite transition metal precursor and the mixture had a stoichiometric ratio of Li:M of 1.10:1.

### [Example 6] not part of the invention

A cathode active material was prepared by the same procedure as described in Example 5, except that the mixture had a stoichiometric ratio of Li:M of 1.20:1.

### [Comparative Example 4]

A cathode active material was prepared by the same procedure as described in Example 5, except that the mixture had a stoichiometric ratio of Li:M of 1.03:1.

### [Comparative Example 5]

A cathode active material was prepared by the same procedure as described in Example 5, except that the mixture had a stoichiometric ratio of Li:M of 1.05:1.

### [Example 7] not part of the invention

A cathode active material was prepared by the same procedure as described in Example 5, except that a combined hydroxide M(OH)₂ (M=Ni_{0.492}Mn_{0.508}) was used as a composite transition metal precursor.

### [Example 8] not part of the invention

A cathode active material was prepared by the same procedure as described in Example 7, except that the mixture had a stoichiometric ratio of Li:M of 1.20:1.

### [Comparative Example 6]

A cathode active material was prepared by the same procedure as described in Example 7, except that the mixture had a stoichiometric ratio of Li:M of 1.03:1.

### [Comparative Example 7]

A cathode active material was prepared by the same procedure as described in Example 7, except that the mixture had a stoichiometric ratio of Li:M of 1.05:1.

### [Example 9] not part of the invention

A cathode active material was prepared by the same procedure as described in Example 5, except that a combined hydroxide M(OH)₂ (M=Ni_{0.478}Mn_{0.522}) was used as a composite transition metal precursor.

### [Example 10] not part of the invention

A cathode active material was prepared by the same procedure as described in Example 9, except that the mixture had a stoichiometric ratio of Li:M of 1.20:1.

### [Comparative Example 8]

A cathode active material was prepared by the same procedure as described in Example 9, except that the mixture had a stoichiometric ratio of Li:M of 1.03:1.

### [Comparative Example 9]

A cathode active material was prepared by the same procedure as described in Example 9, except that the mixture had a stoichiometric ratio of Li:M of 1.05:1.

### [Example 11] not part of the invention

A cathode active material was prepared by the same procedure as described in Example 5, except that a combined hydroxide M(OH)₂ (M=Ni_{0.450}Mn_{0.552}) was used as a composite transition metal precursor.

### [Example 12] not part of the invention

A cathode active material was prepared by the same procedure as described in Example 11, except that the mixture had a stoichiometric ratio of Li:M of 1.20:1.

### [Comparative Example 10]

A cathode active material was prepared by the same procedure as described in Example 12, except that the mixture had a stoichiometric ratio of Li:M of 1.03:1.

### [Comparative Example 11]

A cathode active material was prepared by the same procedure as described in Example 12, except that the mixture had a stoichiometric ratio of Li:M of 1.05:1.

### [Experimental Example 1] (Rate characteristics determination)

Each of the cathode active materials prepared according to Examples 1 to 12 and Comparative Examples 1 to 11, respectively, was added to N-methyl pyrrolidone (NMP) together with a conductive material and a binder in a relative ratio of the active material, the conductive material and the binder of 95:2.5:2.5. The obtained slurry was applied to an aluminum foil to form an electrode which in turn was fabricated into a coin type battery. Li metal was used as a counter electrode while an electrolyte was a liquid electrolyte containing 1M LiPF₆ in EC:EMC (1:1).

The fabricated battery was charged with 0.1C and discharged with 0.1C in the first cycle, and then, was charged with 0.1C and discharged with 0.2C in the second cycle. After that, charging was conducted with 0.5C while discharging was carried out with 0.1C, 0.2C, 0.5C, 1C, 1.5C and 2.0C, respectively, in the third cycle and later. For the active material in the battery, rate characteristics were determined.

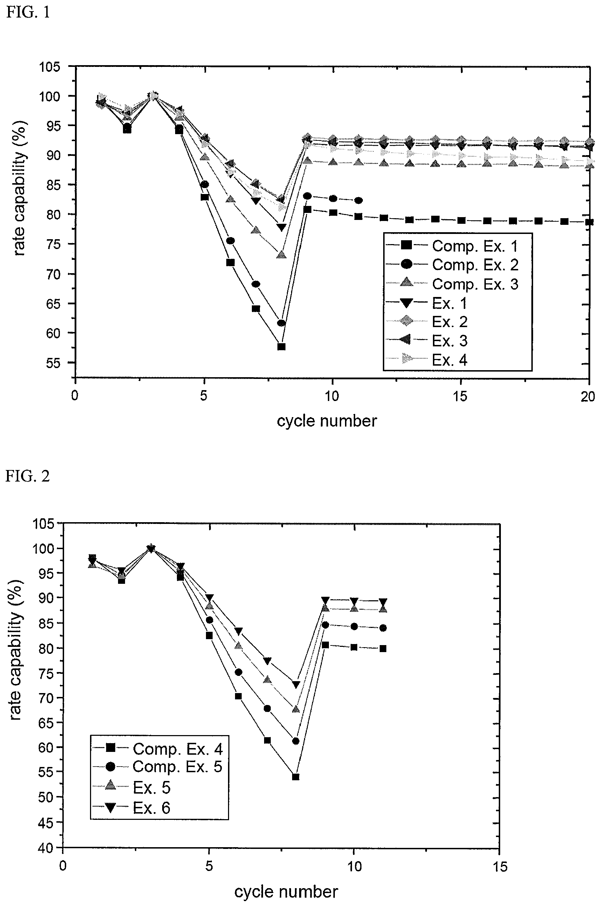

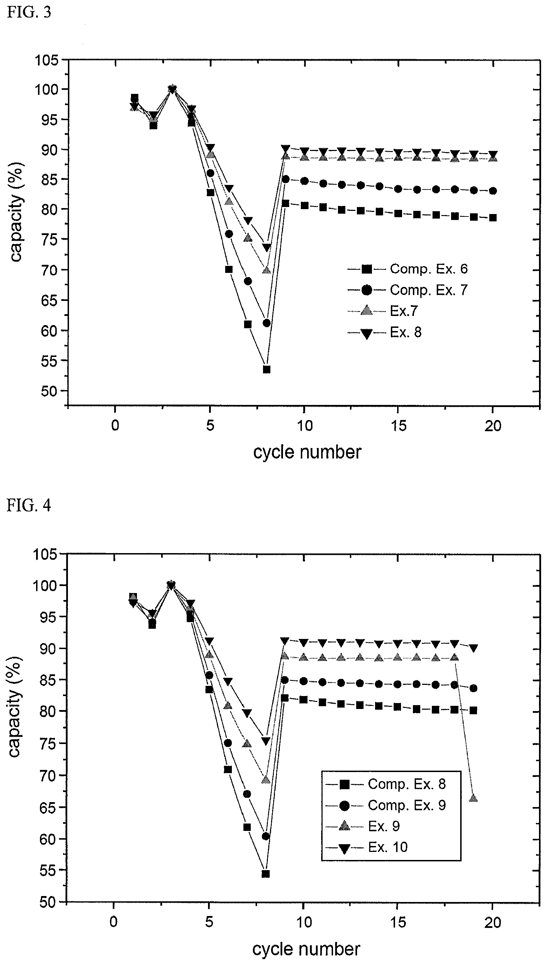

All cathode active materials prepared according to Examples 1 to 4 as well as Comparative Examples 1 to 3, Examples 5 and 6 as well as Comparative Examples 4 and 5, Examples 7 and 8 as well as Comparative Examples 6 and 7, Examples 9 and 10 as well as Comparative Examples 8 and 9, and Examples 11 and 12 as well as Comparative Examples 10 and 11, respectively, were subjected to determination of rate characteristics. With reference to the 0.1C discharging (100%) condition, discharge capacities of the battery under other discharging conditions were measured relative to the above reference and the measured results are shown in FIGS. 1 to 5.

Referring to FIGS. 1 to 5, it was found that the discharge capacity generally tends to be reduced with an increase in discharge rate. However, during high rate discharge with at least 1C after eight (8) cycles, the batteries including the cathode active materials prepared according to Examples 1 to 12 exhibited higher capacity, that is, superior high rate discharge characteristics of at least 70%, than the batteries including the cathode active materials according to Comparative Examples 1 to 11. Especially, it was determined that a difference in discharge capacities is noticeably increased as the discharge rate is elevated. As a result, it can be seen that the cathode active material of the present invention exhibits remarkably enhanced rate characteristics.

### [Experimental Example 2] (Lattice constant measurement of active material)

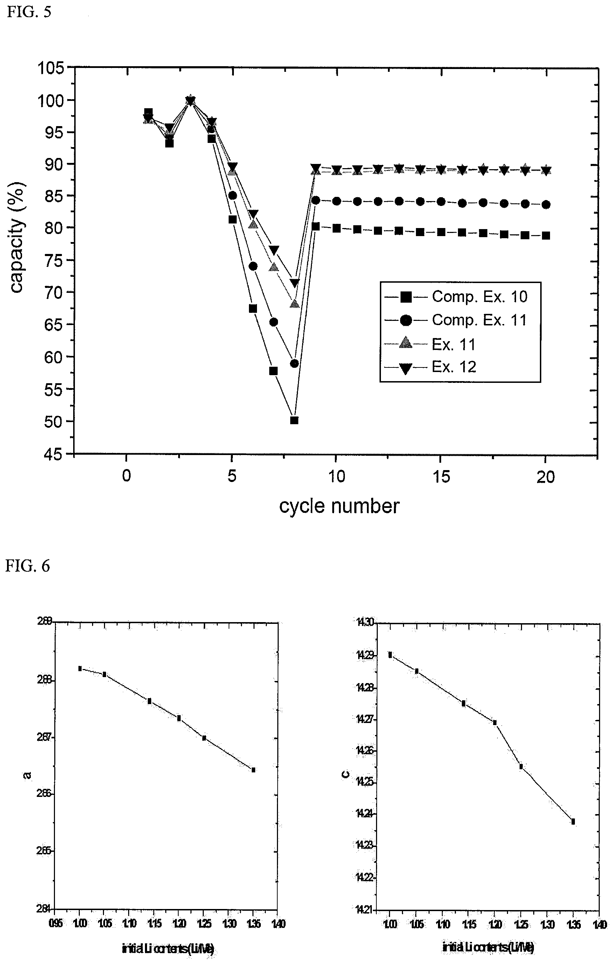

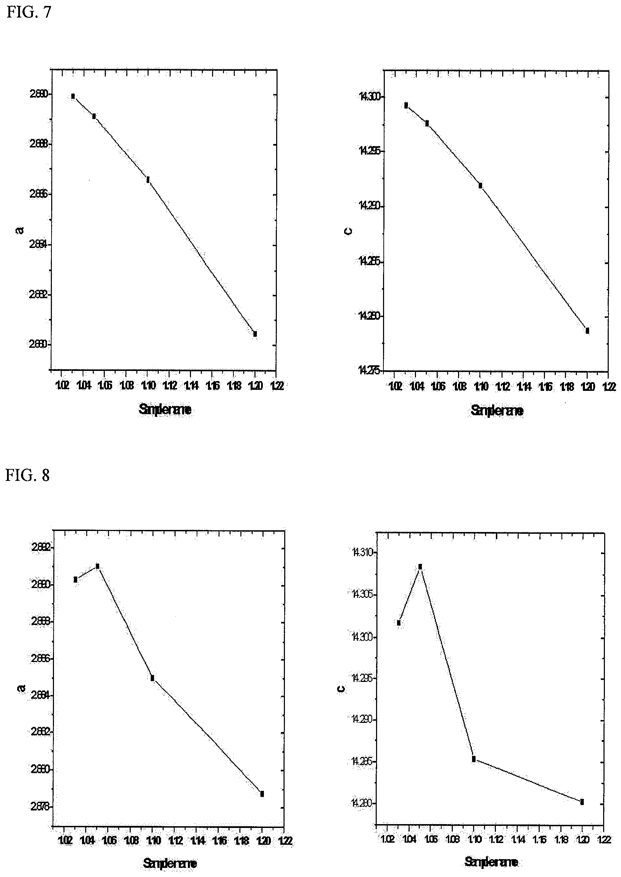

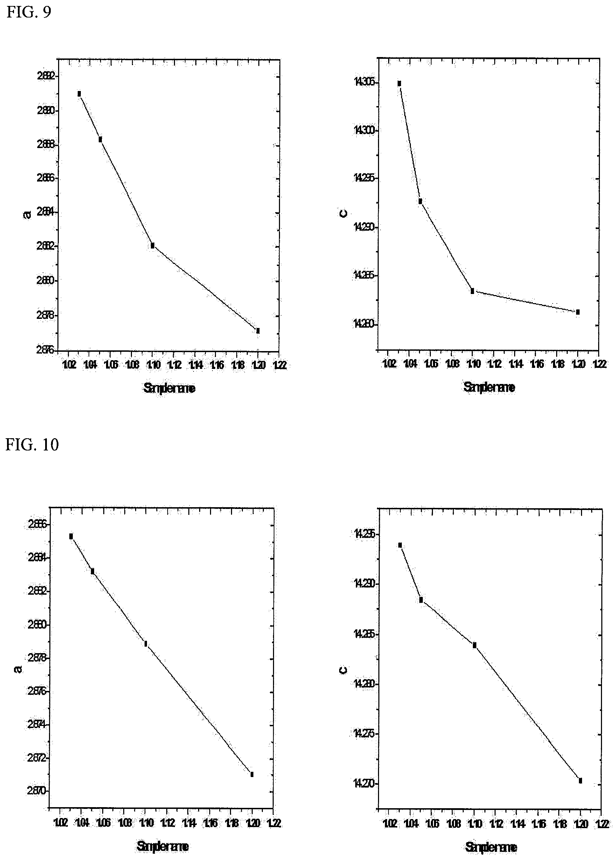

Lattice constants (a and c) for cathode active materials according to Examples 1 to 4, Examples 5 and 6, Examples 7 and 8, Examples 9 and 10, and Examples 11 and 12, respectively, were measured and results thereof are shown in FIGS. 6 to 10, each depicting a pair of graphs to illustrate the measured lattice constants.

Referring to FIGS. 6 to 10, it was found that the lattice constant is gradually decreased when an amount of lithium contained in the cathode active material is increased. The reason behind this result is believed to be that a coulombic force acting between oxygen and nickel increases with an increase in oxidation number of nickel, thus reinforcing a bonding force therebetween.

Therefore, the cathode active material of the present invention has improved bonding force between oxygen and nickel and increased stability of crystal structure so as to secure a stable path for movement of lithium ions, thereby exhibiting remarkably enhanced rate characteristics.

### INDUSTRIAL APPLICABILITY

As described above, the cathode active material in accordance with the present invention includes a lithium-transition metal composite oxide which has a predetermined constitutional composition and contains excess lithium, wherein each constitutional element has a predetermined oxidation number, thereby maintaining a stable crystal structure and exhibiting excellent rate characteristics.

## Claims

1. A cathode active material for a lithium secondary battery, including: a lithium transition metal composite oxide represented by the following formula (1):
Li₁₊ₐNi'_{b}Ni"_{c}Mn_{d}CoₑO₂ (1)
wherein a, b, c, d and e are defined by an equation of 1.1≤(1+a)/(b+c+d+e)<1.3 such that the molar fraction of Li relative to all transition metals in the composite oxide is at least 1.1 and is less than 1.3;
an average oxidation number of each transition metal element described above is represented as follows:
Ni'>2+, Ni"=3+, Mn=4+ and Co=3+;
0<e≤0.1;
0.2<b+c≤0.55, 0.2<d≤0.55;
|(b+c)-d|<0.1; and
wherein the molar ratio of nickel (b+c) is greater than that of manganese (d), and the excess nickel above the molar ratio of nickel to the molar ratio of manganese may be Ni".

2. The cathode active material according to claim 1, wherein a molar fraction of Li relative to all transition metals in the composite oxide ranges from 1.10 to 1.20.

3. The cathode active material according to claim 1, wherein a ratio of (b+c):d ranges from 1:0.7 to 1.3.

4. A lithium secondary battery including the cathode active material as defined in any one of claims 1 to 3.

## Patentansprüche

1. Kathodenaktivmaterial für eine Lithium-Sekundärbatterie, das ein Lithium-Übergangsmetall-Mischoxid der nachstehenden Formel (1) einschliesst:
Li₁₊ₐNi'_{b}Ni"_{c}Mn_{d}CoₑO₂ (1)
worin a, b, c, d und e durch die Gleichung 1,1 ≤ (1+a)/(b+c+d+e) < 1,3 definiert sind, so dass der molare Anteil an Li, bezogen auf alle Übergangsmetalle in dem Mischoxid, zumindest 1,1 und weniger als 1,3 ist;
die durchschnittliche Oxidationszahl jedes oben beschriebenen Übergangsmetallelements wie folgt dargestellt ist:
Ni'> 2+, Ni"=3+, Mn=4+ und Co=3+;
0 < e ≤ 0,1;
0,2 < b+c ≤ 0,55, 02 < d ≤ 0,55;
|(b+c)-d|< 0.1; und
wobei das Molverhältnis von Nickel (b+c) grösser als das von Mangan (d) ist und das überschüssige Nickel oberhalb des Molverhältnisses von Nickel, bezogen auf das Molverhältnis von Mangan, Ni" sein kann.

2. Kathodenaktivmaterial gemäss Anspruch 1, wobei der molare Anteil an Li, bezogen auf alle Übergangsmetalle in dem Mischoxid, im Bereich von 1,10 bis 1,20 liegt.

3. Kathodenaktivmaterial gemäss Anspruch 1, wobei das Verhältnis von (b+c):d im Bereich von 1:0,7 bis 1,3 liegt.

4. Lithium-Sekundärbatterie, die das in irgendeinem der Ansprüche 1 bis 3 definierte Kathodenaktivmaterial einschliesst.

## Revendications

1. Matériau actif cathodique pour batterie secondaire au lithium, incluant : un oxyde composite métallique à transition lithium représenté par la formule (1) suivante :
Li₁₊ₐNi'_{b}Ni"_{c}Mn_{d}CoₑO₂ (1)
dans lequel a, b, c, d et e sont définis par une équation de 1,1≤(1+a)/(b+c+d+e)<1,3 telle que la fraction molaire de Li par rapport à tous les métaux de transition de l'oxyde composite est d'au moins 1,1 et est inférieure à 1,3 ;
un nombre moyen d'oxydation de chaque élément de métal de transition décrit ci-dessus est représenté comme suit :
Ni'>2+, Ni"=3+, Mn=4+ et Co=3+ ;
0<e≤0,1 ;
0,2<b+c≤0,55, 0,2<d≤0,55 ;
|(b + c)-d|<0,1 ; et
dans lequel le ratio molaire du nickel (b+c) est supérieur à celui du manganèse (d), et le nickel en excès au-dessus du ratio molaire de nickel par rapport au ratio molaire de manganèse peut être Ni".

2. Matériau actif cathodique selon la revendication 1, dans lequel la fraction molaire de Li par rapport à tous les métaux de transition dans l'oxyde composite va de 1,10 à 1,20.

3. Matériau actif cathodique selon la revendication 1, dans lequel un ratio (b+c):d va de 1:0,7 à 1,3.

4. Batterie de secours au lithium incluant le matériau actif cathodique tel que défini dans l'une quelconque des revendications 1 à 3.
